# EUROPÄISCHE PATENTSCHRIFT

(11) **EP 1 731 946 B1**
(45) Veröffentlichungstag und Bekanntmachung des Hinweises auf die Patenterteilung: **29.07.2015**
(21) Anmeldenummer: 06009587.4
(22) Anmeldetag: 10.05.2006
(51) Int. Cl.: G02C 1/04

(54) **Scharnierlose Brille, insbesondere Arbeitsschutzbrille**
Hinge-free goggles, in particular safety goggles
Lunettes sans charnière, en particulier lunettes de protection

(30) Priorität: 10.06.2005 DE 202005009131 U
(43) Veröffentlichungstag der Anmeldung: 13.12.2006
(73) Patentinhaber: Uvex Arbeitsschutz GmbH, 90766 Fürth (DE)
(72) Erfinder: Brück, Stefan, 90419 Nürnberg (DE)
(74) Vertreter: Rau, Schneck & Hübner Patentanwälte Rechtsanwälte PartGmbB

(56) Entgegenhaltungen:
- WO-A-91/17468
- DE-U1-202004 002 495
- DE-U1-202005 009 131
- US-A- 5 760 868
- US-A- 5 796 460
- US-A- 5 903 331
- US-B1- 6 386 704

## Beschreibung

Die Erfindung richtet sich auf eine schamierlose Arbeitsschutzbrille, wobei die Bügel einstückig mit einem oberen Rahmenteil ausgebildet sind und an dem oberen Rahmenteil Befestigungseinrichtungen für die Scheibe ausgebildet sind, wobei die Befestigungseinrichtungen für die Scheibe mit einem eigenelastischen oberen Rahmenteil einstückig aus Kunststoff gespritzt sind.

Scharnierlose Brillen sind aus der US 5 760 868 A und aus der WO 91/17468 A1 bekannt.

Eine weitere Brille ist aus EP 0 561 763 A1 bekannt. Zur Befestigung der Scheibe sind bei der vorbekannten Brille an einem oberen Rahmenteil U-förmige Halterungen angelötet, wobei die zapfenartigen U-Schenkel sich in Bohrungen der Scheibe erstrecken und dort verankert sind. Diese Ausgestaltung ermöglicht keinen oder zumindest keinen einfachen Schreibenwechsel, wie er insbesondere bei Arbeitsschutzbrillen erforderlich ist, und ist insbesondere in der Herstellung zeit- und kostenaufwendig.

Aus DE 101 05 930 B4 ist eine Brillenfassung bekannt, die einstückig mit Bügeln aus einem Kunststoff-Plattenmaterial hergestellt ist mit zwei geschlossenen Ausnehmungen zur Aufnahme der Brillengläser, wobei die Brillengläser Nuten aufweisen und der Rahmen in die Nuten der Gläser einrastbar und hierdurch festlegbar ist. Eine solche Brille eignet sich nicht für Arbeitsschutzbrillen und eröffnet im Übrigen auch nicht die Möglichkeit eines ansprechenden Designs.

In der US 6 386 704 B1 wird eine Brille beschrieben, deren Bügel mit einem Scharnier an einem Rahmen befestigt sind. Der Rahmen enthält an seiner Unterseite eine durchgehende Nut, in die die Scheibe eingesetzt ist. An den beiden seitlichen Enden dieser Nut sind Schlitze vorgesehen, in die Vorsprünge der Scheibe eingreifen. Ein einstückig an den Rahmen angeformtes Nasenpad ist ebenfalls geschlitzt. Durch die Schlitzausnehmung des Nasenpads wird die Scheibe hindurchgesteckt, um zur Nut im Rahmen zu gelangen. Die Scheibe enthält an ihrem oberen Rand im Nasenbereich Rastelemente, die in korrespondierende Ausnehmungen am Rahmenteil bzw. am Nasenpad einrasten.

Hiervon ausgehend liegt der Erfindung die Aufgabe zugrunde, eine Arbeitsschutzbrille der eingangs genannten Art so auszugestalten, dass bei hohem Tragekomfort und unter Gewährleistung aller sicherheitstechnischen Anforderungen eine kostengünstige Herstellbarkeit möglich ist.

Diese Aufgabe wird gelöst durch die Merkmale von Anspruch 1.

Durch die einstückige Herstellung durch Spritzen aus Kunststoff von Bügeln, oberem Rahmenteil und Befestigungseinrichtungen wird eine sehr vorteilhafte Herstellbarkeit erreicht. Als Material kann beispielsweise Polyamid 12 herangezogen werden.

Bei Verwendung eines derartigen Materials kann vorgesehen sein, dass die Bügel im ungetragenen Zustand sich bogenförmig, gegebenenfalls sich im hinteren Bereich überlappend nach innen erstrecken und zum Tragen dann aufgebogen werden, wobei sie an dem Kopf des Benutzers dann elastisch unter Gewährleistung eines sicheren Sitzes anliegen. Außerdem weist das obere Rahmenteil die zum Einsetzen der Scheibe erforderliche elastische Verformbarkeit auf.

Es ist weiterhin vorgesehen, dass die Befestigungseinrichtung wenigstens zwei hin den Brillenrand übergreifende hakenartige Ansätze am oberen Rahmenteil beiderseits der Nasenaufnehmung sowie einen in eine Nasenausnehmung der Scheibe einrastbaren, an einer vertikalen Verlängerung des oberen Rahmenteils im Nasenbereich ausgebildeten Hakenansatz umfassen.

In weiterer Ausgestaltung der Erfindung kann vorgesehen sein, dass die Bügel sich ausgehend vom oberen Rahmenteil im nicht getragenen Zustand bogenförmig nach innen erstrecken und sich gegebenenfalls im Endbereich überlappen. Hierdurch wird die Notwendigkeit eines Scharniers mit gesonderten Teilen vermieden, was eine kostengünstige Herstellung ermöglicht, und gleichzeitig wird auf Grund der Vorspannung eine sichere Anlage am Kopf des Trägers erzielt.

Vorzugsweise weist die Scheibe an ihrer Oberkante U-förmige Ausnehmungen auf, welche so dimensioniert sind, dass sie die sich vom oberen Rahmenteil wegerstreckenden Vorsprünge der hakenartigen Ansätze formschlüssig umgreifen, wobei wiederum der seitliche Rand dieser Ausnehmungen von einem querverlaufenden Abschnitt am vorderen Ende der Vorsprünge übergriffen wird.

Die vorstehend beschriebene Art der Verbindung von Scheibe und oberem Rahmenteil ist nicht nur herstellungstechnisch günstig, sondern weist darüber hinaus den für eine Arbeitsschutzbrille ganz wesentlichen Vorteil auf, dass die Scheibe relativ zu dem oberen Rahmenteil ein gewisses Spiel besitzt, durch welches die Energie von auf die Außenseite der Scheibe auftreffenden Partikeln absorbiert werden kann. Dementsprechend erfüllt eine derartige Brille die Anforderungen an die Beschussfestigkeit gemäß EN 166 F - Beschuss 45 m/sec.

Die Befestigungseinrichtung kann weiterhin im Bereich des seitlichen äußeren Randes der Scheibe am oberen Rahmenteil ausgebildete Ansätze umfassen, die den seitlichen oberen Rand der Scheiben im eingesetzten Zustand übergreifen.

Dabei ist vorzugsweise vorgesehen, dass im Bereich der seitlichen Ansätze des oberen Rahmenteils die Scheibe Ausnehmungen aufweist, welche formschlüssig mit den Ansätzen korrespondieren.

Die seitlichen Begrenzungswände der U-förmigen Ausnehmungen können sich in eine Richtung senkrecht zur Gesichtsebene erstrecken, was eine leichte Entformung beim Spritzen der Scheibe ermöglicht.

Mit Vorteil sind Nasenauflage und Bügelende im Zweikomponenten-Gegenstromspritz-Verfahren aus einem weicheren Kunststoff gefertigt, um den Tragekomfort zu erhöhen. Mit dieser Herstellungstechnik ist es möglich, Bügel und Rahmen einstückig auszubilden und trotzdem die Härte im jeweiligen Bereich an die Anforderungen anzupassen.

Die Bügel weisen im Querschnitt ein kastenförmiges Profil derart auf, dass die Höhe deutlich größer ist als die Tiefe, so dass einerseits eine hinreichende Festigkeit erzielt wird, es andererseits aber auch möglich ist, die Brillen um 180° nach Innen zu biegen, so dass die Brille in einem Etui untergebracht werden kann bzw. zur Aufbewahrung in eine Tasche gesteckt werden kann. Das Querschnittsprofil des Rahmens bzw. der Bügel ist an unterschiedlichen Stellen unterschiedlich, um so beispielsweise im "Scharnierbereich", also im Bereich seitlich der Scheibe eine hinreichend hohe Flexibilität zum Umbiegen der Bügel zu erreichen.

Die Erfindung richtet sich auch auf ein Verfahren zum Befestigen einer einstückigen Scheibe an einem einstückigen Rahmenteil, welches seitlich des Nasenbereiches hakenartige Ansätze, im Nasenbereich einen Hakenansatz und zwei seitliche, den äußeren Rand der Scheibe übergreifende Ansätze aufweist, wobei vorgesehen ist, dass die Scheibe zur Befestigung an dem Rahmenteil unter Verkürzung ihrer Breite aufgewölbt und mit ihrem Außenrand unter die seitlichen Ansätze eingeschoben wird, dass die Scheibe dann unter die Ansätze seitlich des Nasenbereiches geschwenkt wird, und dass abschließend der Hakenansatz im Bereich der Nasenausnehmung der Scheibe eingerastet wird.

Nachfolgend wird die Erfindung an Hand eines bevorzugten Ausführungsbeispiels in Verbindung mit der Zeichnung näher erläutert. Dabei zeigen:
- Fig. 1: eine perspektivische Ansicht einer gebrauchsfertig montierten erfindungsgemäßen Brille,
- Fig. 2: eine perspektivische Ansicht der Scheibe,
- Fig. 3: eine perspektivische Ansicht von oberem Rahmenteil und Bügeln,
- Fig. 4: Rahmenteil und Scheibe in einem vormontierten Zustand und
- Fig. 5: Rahmenteil und Scheibe in einem auf Fig. 4 folgendem Montageschritt.

Eine in der Zeichnung dargestellte Brille 1 umfasst eine einstückige, durchgehende Scheibe 2, ein oberes Rahmenteil 3 und daran einstückig angespritzte Bügel 4, 5, welche sich vom oberen Rahmenteil bogenförmig nach innen gekrümmt und sich im jeweiligen Endbereich 6, 7 überlappend wegerstrecken.

Das obere Rahmenteil 3 weist einstückig mit diesem gespritzte seitliche Ansätze 8 auf, welche über einen verjüngten Steg 9 mit dem Rahmenteil 3 verbunden sind.

Beiderseits des Nasenbereichs 10 sind am oberen Rahmenteil 3 hakenartige Ansätze 11 vorgesehen, die sich vom Rahmenteil 3 wegerstreckende Vorsprünge 12 und an deren äußerem Ende angeordnete parallel zum oberen Rahmenteil 3 verlaufende Abschnitte 13 umfassen.

Die Scheibe 2 weist eine Nasenaufnehmung 14 auf und beiderseits derselben U-förmige Ausnehmungen 15, welche so dimensioniert sind, dass sie die Vorsprünge 12 der hakenartigen Ansätze 11 umgreifen und ihrerseits längs ihres vertikalen Randes von dem Abschnitt 13 der hakenartigen Ansätze 11 übergriffen werden.

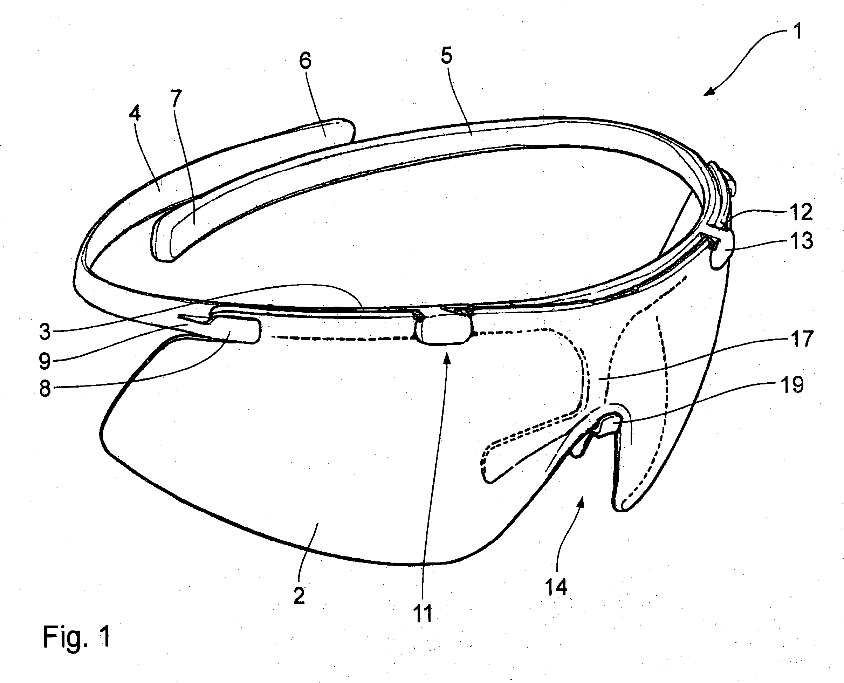

Weiterhin sind an der Scheibe 2 seitlich Ausnehmungen 16 vorgesehen, welche den Steg 9 der Ansätze 8 übergreifen und von den Ansätzen 8 ihrerseits wieder übergriffen werden, wie dies aus Fig. 1 erkennbar ist.

Einstückig mit dem Rahmenteil 3 erstreckt sich im Nasenbereich 14 von diesem eine vertikale Verlängerung 17 nach unten an deren unterem Ende Nasenpads 18 und ein Hakenansatz 19 ausgebildet sind. Dieser übergreift im eingesetzten Zustand der Scheibe 2 den oberen Bereich der Nasenausnehmung 14.

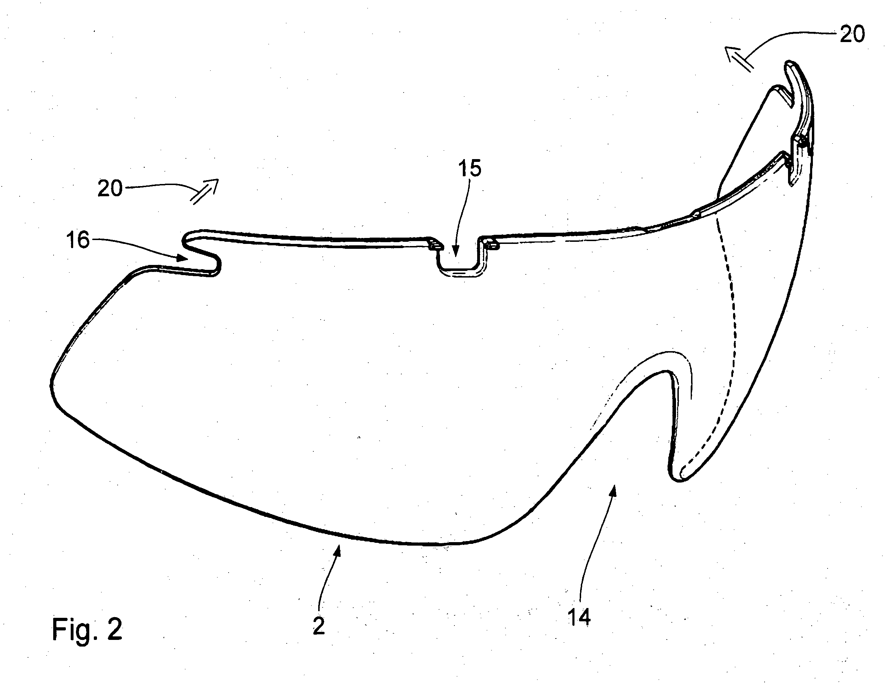

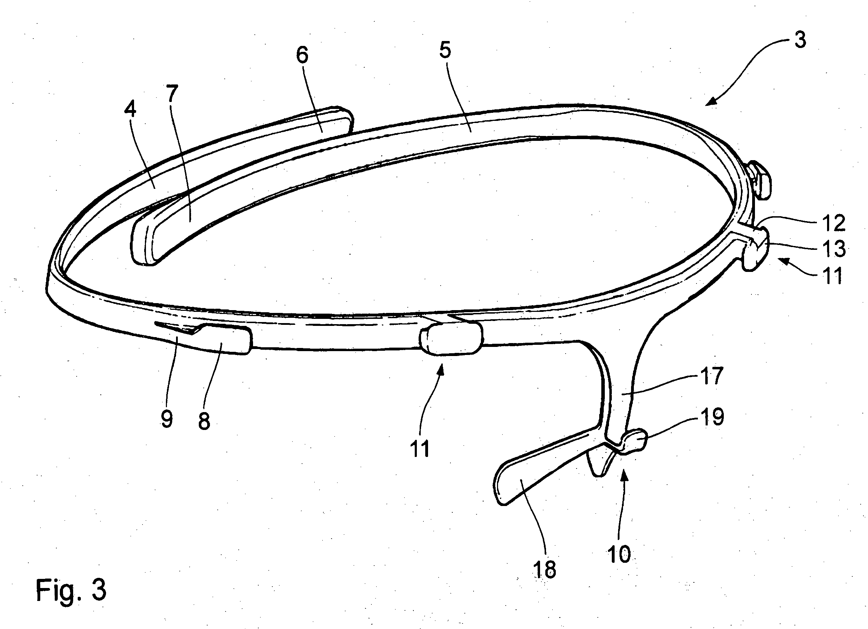

Ausgehend von dem in Fig. 2 und 3 dargestellten demontierten Zustand von Rahmenteil 3 einerseits und Scheibe 2 andererseits erfolgt die Befestigung der Scheibe 2 wie folgt:

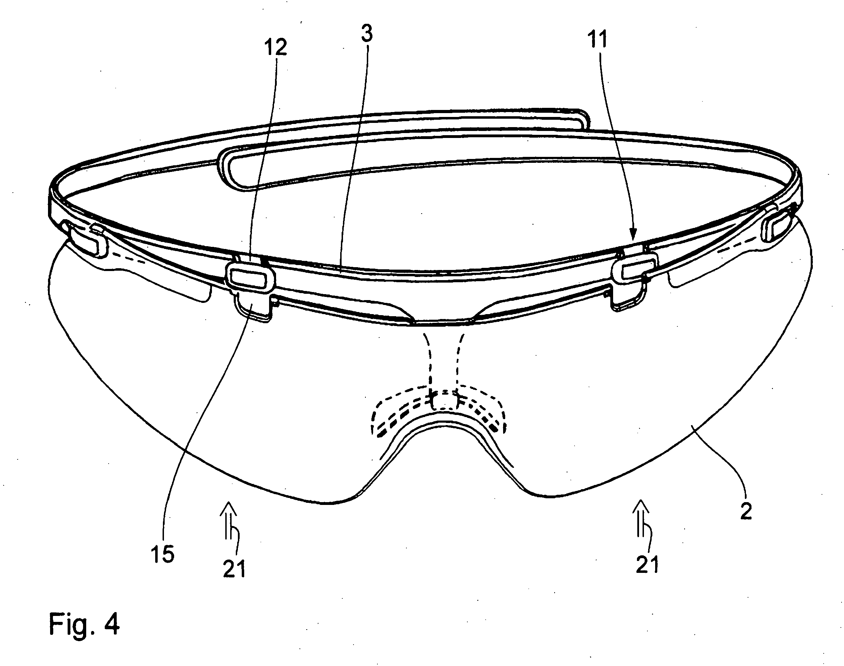

Die Scheibe 2 wird im Bereich ihrer Außenseiten in Richtung der Pfeile 20 (vergleiche Fig. 2) etwas weiter nach innen gewölbt, so dass sich ihre effektive Länge verkürzt. Es ist nun möglich, die seitlichen Ausnehmungen 16 unter die Ansätze 8 und über die Stege 9 der Ansätze 8 zu schieben, so dass der in Fig. 4 dargestellte Zustand erreicht wird.

Hiervon ausgehend wird die Scheibe 2 relativ zum Rahmen 3 nach oben geschwenkt, so dass die U-förmigen Ausnehmungen 15 die Vorsprünge 12 der Ansätze 11 umgreifen und die Abschnitte 13 die seitlichen Außenränder der Ausnehmungen 15 übergreifen.

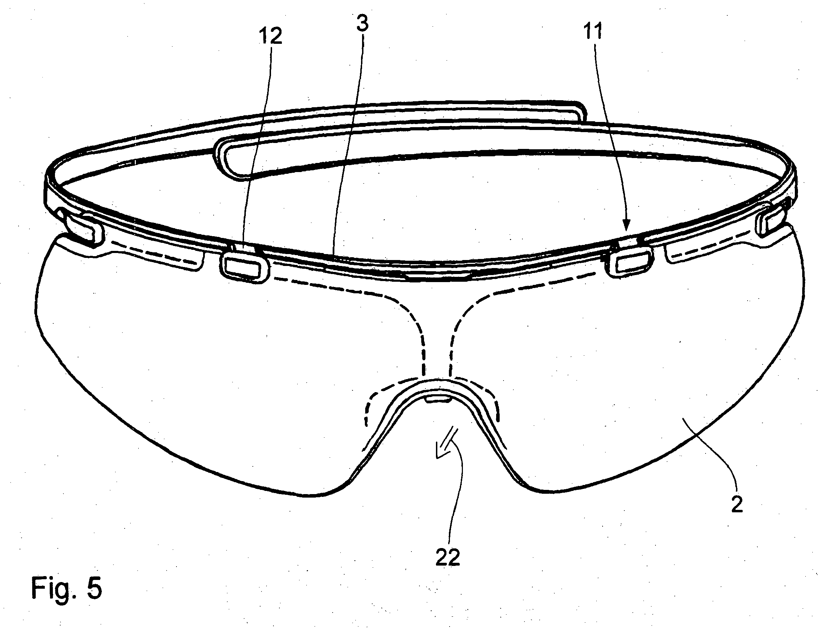

Ausgehend von diesem in Fig. 5 dargestellten Zustand wird dann der Hakenansatz 19 im Nasenbereich zusammen mit der Verlängerung 17 in Richtung des Pfeils 22 aus der Zeichenebene heraus nach vorne geschwenkt, so dass der Hakenansatz 19, wie in Fig. 1 dargestellt, über der Nasenausnehmung 14 einrastet.

## Patentansprüche

1. Scharnierlose Arbeitsschutzbrille, wobei die Bügel einstückig mit einem oberen Rahmenteil (3) ausgebildet sind und an dem oberen Rahmenteil (3) Befestigungseinrichtungen für die Scheibe (2) ausgebildet sind, wobei die Befestigungseinrichtungen für die Scheibe (2) mit einem eigenelastischen oberen Rahmenteil (3) einstückig aus Kunststoff gespritzt sind, **dadurch gekennzeichnet, dass** die Befestigungseinrichtungen beiderseits eines Nasenbereichs (10)wenigstens zwei den Brillenrand übergreifende hakenartige Ansätze (11) am oberen Rahmenteil (3) sowie einen in eine Nasenausnehmung (14) der Scheibe (2) einrastbaren, an einer vertikalen Verlängerung (17) des oberen Rahmenteils (3) im Nasenbereich (10) ausgebildeten Hakenansatz (19) umfassen, wobei die vertikale Verlängerung (17), an deren unterem Ende Nasenpads (18) und der Hakenansatz (19) ausgebildet sind, einstückig mit dem oberen Rahmenteil (3) ist und sich von diesem nach unten erstreckt.

2. Arbeitsschutzbrille nach Anspruch 1, **dadurch gekennzeichnet, dass** die Bügel (4, 5) sich ausgehend vom oberen Rahmenteil (3) im nicht getragenem Zustand bogenförmig nach innen erstrecken.

3. Arbeitsschutzbrille nach Anspruch 1, **dadurch gekennzeichnet, dass** die Scheibe an ihrer Oberkante U-förmige Ausnehmungen (15) aufweist, welche so dimensioniert sind, dass sie die sich vom oberen Rahmenteil (3) wegerstreckenden Vorsprünge (12) der hakenartigen Ansätze formschlüssig umgreifen, wobei wiederum der seitliche Rand dieser Ausnehmungen von einem querverlaufenden Abschnitt (13) am vorderen Ende der Vorsprünge (12) übergriffen wird.

4. Arbeitsschutzbrille nach Anspruch 1, **dadurch gekennzeichnet, dass** im Bereich des seitlichen äußeren Randes der Scheibe (2) am oberen Rahmenteil (3) Ansätze (8) ausgebildet sind, die den seitlichen oberen Rand der Scheibe (2) im eingesetzten Zustand übergreifen.

5. Arbeitsschutzbrille nach Anspruch 4, **dadurch gekennzeichnet, dass** im Bereich der seitlichen Ansätze (8) des oberen Rahmenteils (3) die Scheibe (2) Ausnehmungen (16) aufweist, welche formschlüssig mit den Ansätzen (8) korrespondieren.

6. Arbeitsschutzbrille nach Anspruch 3, **dadurch gekennzeichnet, dass** die seitlichen Begrenzungswände der U-förmigen Ausnehmungen (15) sich in eine Richtung senkrecht zur Gesichtsebene erstrecken.

7. Verfahren zum Befestigen einer einstückigen Scheibe (2) an einem einstückigen Rahmenteil (3), welches seitlich des Nasenbereiches (10) hakenartige Ansätze (11), im Nasenbereich (10) einen Hakenansatz (19) und zwei seitliche, den äußeren Rand der Scheibe (2) übergreifende Ansätze (8) aufweist, wobei die Scheibe (2) zur Befestigung an dem Rahmenteil(3) unter Verkürzung ihrer Breite aufgewölbt und mit ihrem Außenrand unter die seitlichen Ansätze (8) eingeschoben wird, dass die Scheibe (2) dann unter die hakenartigen Ansätze (11) seitlich des Nasenbereiches (10) geschwenkt wird, und dass abschließend der Hakenansatz (19) mittels Schwenken nach vorne im Bereich der Nasenausnehmung (14) der Scheibe (2) eingerastet wird.

## Claims

1. Hinge-free safety googles, in which the arms are formed in one piece with an upper frame part (3) and securing devices for the lens (2) are formed on the upper frame part (3), and the devices for securing the lens (2) to an inherently elastic upper frame part (3) are injection-moulded in one piece from plastic, **characterised in that** the securing devices comprise on both sides of a nose area (10) at least two hook-like attachments (11) gripping over the edge of the goggles on the upper frame part (3) and a hook attachment (19) engaging in a nose recess (14) of the lens (2) and formed on a vertical extension (17) of the upper frame part (3) in the nose area (10), wherein the vertical extension (17), at the lower end of which the nose pads (18) and the hook attachment (19) are formed, is in one piece with the upper frame part (3) and extends downwards from the latter.

2. Safety goggles according to claim 1, **characterised in that** the arms (4, 5) extend inwardly in a curved manner from the upper frame part (3) in the unworn state.

3. Safety goggles according to claim 1, **characterised in that** the lens has U-shaped recesses (15) on its upper edge which are dimensioned so that they grip in a form-fitting manner around the projections (12) of the hook-like attachments extending away from the upper frame part (3), wherein a transverse section (13) at the front end of the projections (12) grips over the lateral edge of said recesses.

4. Safety goggles according to claim 1, **characterised in that** in the area of the lateral outer edge of the lens (2) on the upper frame part (3) attachments (8) are formed which grip over the lateral upper edge of the lens (2) in the inserted state.

5. Safety goggles according to claim 4, **characterised in that** in the area of the lateral attachments (8) of the upper frame part (3) the lens (2) comprises recesses (16) which correspond with the attachments (8) in a form-fitting manner.

6. Safety goggles according to claim 3, **characterised in that** the lateral delimiting walls of the U-shaped recesses (15) extend in a direction perpendicular to the visual plane.

7. Method for securing a one-piece lens (2) onto a one-piece frame part (3), which has hook-like attachments (11) to the side of the nose area (10), has a hook attachment (19) in the nose area (10) and two lateral attachments (8) gripping over the outer edge of the lens (2), wherein the lens (2) is curved for securing to the frame part (3) by shortening its width and is inserted with its outer edge underneath the lateral attachments (8), the lens (2) is then pivoted underneath the hook-like attachments (11) to the side of the nose area, and lastly by pivoting to the front the hook attachment (19) is engaged in the area of the nose recess (14) of the lens (2).

## Revendications

1. Lunettes de protection sans charnière, dans lesquelles les branches sont conçues d'un seul tenant avec la partie de monture supérieure (3) et où des systèmes de fixation pour le verre (2) sont formés sur la partie de monture supérieure (3), les systèmes de fixation pour le verre (2) en matière plastique étant moulés par injection d'un seul tenant avec une partie de monture supérieure (3) intrinsèquement élastique, **caractérisées en ce que** les systèmes de fixation comprennent, des deux côtés d'une partie nasale (10), au moins deux embouts de type crochet (11) enserrant le bord des lunettes sur la partie de monture supérieure (3), ainsi qu'un embout en forme de crochet (19), pouvant s'encliqueter dans un évidement pour le nez (14) du verre (2), formé sur un prolongement (17) vertical de la partie de monture supérieure (3) dans la partie nasale (10), où le prolongement (17) vertical, à l'extrémité inférieure duquel sont formés des plaquettes d'appui (18) pour le nez et l'embout en forme de crochet (19), est formé d'un seul tenant avec la partie de monture supérieure (3) et s'étend vers le bas à partir de celle-ci.

2. Lunettes de protection selon la revendication 1, **caractérisées en ce que** les branches (4, 5) s'étendent vers l'intérieur en décrivant un arc en partant de la partie de monture supérieure (3) à l'état non porté.

3. Lunettes de protection selon la revendication 3, **caractérisées en ce que** le verre présente des évidements en forme d'U (15) sur son bord supérieur, lesquels sont ainsi dimensionnés qu'ils entourent par complémentarité de formes les saillies (12) des embouts de type crochet s'étendant à partir de la partie de monture supérieure (3), où, de nouveau, les bords latéraux de ces évidements sont recouverts à partir d'une section (13) s'étendant perpendiculairement sur l'extrémité frontale des saillies (12).

4. Lunettes de protection selon la revendication 1, **caractérisées en ce que** des embouts (8) sont formés sur la partie de monture supérieure (3) dans la zone du bord latéral extérieur du verre (2), qui enserrent le bord latéral supérieur du verre (2) dans un état inséré.

5. Lunettes de protection selon la revendication 4, **caractérisées en ce que**, dans la zone des embouts (8) latéraux de la partie de monture supérieure (3), le verre (2) présente des évidements (16), lesquels correspondent avec les embouts (8) par complémentarité de formes.

6. Lunettes de protection selon la revendication 3, **caractérisées en ce que** les parois de délimitation latérales des évidements en forme d'U (15) s'étendent dans une direction perpendiculaire au plan du visage.

7. Procédé de fixation d'un verre (2) formé d'un seul tenant sur une partie de monture (3) formée d'un seul tenant, laquelle présente des embouts de type crochet (11) latéralement par rapport à la partie nasale (10), un embout en forme de crochet (19) au niveau de la partie nasale (10) et deux embouts (8) latéraux enserrant le bord extérieur du verre (2), où le verre (2) est bombé, moyennant un raccourcissement de sa largeur, pour la fixation sur la partie de monture (3) et est inséré avec son bord extérieur sous les embouts (8) latéraux, de sorte que le verre (2) est alors pivoté latéralement par rapport à la partie nasale (10) en dessous des embouts de type crochet (11), et qu'ensuite l'embout en forme de crochet (19) est encliqueté dans la zone de l'évidement pour le nez (14) du verre (2) au moyen d'un pivotement vers l'avant.
